# EUROPEAN PATENT APPLICATION

(11) **EP 2 835 214 A1**
(43) Date of publication of application: **11.02.2015**
(21) Application number: 12873854.9
(22) Date of filing: 02.04.2012
(51) Int. Cl.: B23P 19/00, B25J 13/00, B65G 47/22

(54) **PRODUCTION SYSTEM AND MANUFACTURING METHOD FOR PROCESSED PRODUCTS**

(71) Applicant: Kabushiki Kaisha Yaskawa Denki, Kitakyushu-shi, Fukuoka 806-0004 (JP)
(72) Inventor: MATSUDA, Ryuichi, Kitakyushu-shi Fukuoka 806-0004 (JP); IKEDA, Toshiaki, Kitakyushu-shi Fukuoka 806-0004 (JP); ISHIBASHI, Keigo, kitakyushu-shi Fukuoka 806-0004 (JP); IKENAGA, Takahisa, kitakyushu-shi Fukuoka 806-0004 (JP); HARADA, Toshiyuki, kitakyushu-shi Fukuoka 806-0004 (JP)
(74) Representative: Grünecker, Kinkeldey, Stockmair & Schwanhäusser
(86) International application number: PCT/JP2012/058925
(87) International publication number: WO 2013/150584

(57) **Abstract**

To enhance versatility for a workpiece type to be treated. A production system according to an embodiment includes a circulating device, a robot, and a posture changing mechanism. The circulating device circulates a workpiece along a certain path. The robot holds the workpiece circulated by the circulating device in a holding region that is part of the certain path, to move the workpiece to a certain place. The posture changing mechanism is arranged in the circulating device and changes a posture of the workpiece circulated by the circulating device.

## Description

### Field

The present invention relates to a production system and a method for manufacturing a processed product. Background

In the related art, known is a production system that causes a robot to hold a workpiece and move the held workpiece to another place in a production line, for example.

In recent years, a method has been developed for simplifying a holding operation of the workpiece by a robot by automatically aligning a large number of workpieces in bulk using a device called a parts feeder and supplying the workpieces to the robot (refer to Patent Literature 1).

### Citation List

### Patent Literature

Patent Literature 1: Japanese Patent Application Laid-open No. H6-126555

### Summary

### Technical Problem

However, the related art described above has a room for improvement of enhancing versatility for a workpiece type to be treated.

For example, in a parts feeder used in the related art, a shape of each step formed on an inner surface of a bowl into which workpieces are charged is individually designed corresponding to a size and the like of the workpiece to be treated. Due to this, in the related art, the bowl of the parts feeder should be replaced when the workpiece type to be treated is changed, so that reduction in productivity may be caused.

An aspect of the embodiment is made in view of such a situation, and provides a production system that can enhance versatility for a workpiece type to be treated and a method for manufacturing a processed product.

### Solution to Problem

A production system according to an aspect of embodiment includes a circulating device, a robot, and a posture changing mechanism. The circulating device circulates a workpiece along a certain path. The robot holds the workpiece circulated by the circulating device in a holding region that is part of the certain path, to move the workpiece to a certain place. The posture changing mechanism is arranged in the circulating device and changes a posture of the workpiece circulated by the circulating device.

### Advantageous Effects of Invention

According to an aspect of the embodiment, versatility for a workpiece type to be treated can be enhanced.

### Brief Description of Drawings

FIG. 1 is a schematic perspective view of a production system according to an embodiment.
FIG. 2 is a schematic plan view of the production system according to the embodiment.
FIG. 3A is a schematic diagram illustrating a shape of a bobbin.
FIG. 3B is a schematic diagram illustrating a shape of the bobbin.
FIG. 3C is a schematic diagram illustrating a shape of the bobbin.
FIG. 4 is a schematic perspective view of a circulating device.
FIG. 5 is a schematic side view of a posture changing mechanism viewed from a Y-axis negative direction.
FIG. 6 is a schematic side view of the posture changing mechanism viewed from an X-axis positive direction.
FIG. 7A is a schematic perspective view of a first conveyance regulating unit.
FIG. 7B is a schematic side view of the first conveyance regulating unit.
FIG. 7C is a schematic side view of the first conveyance regulating unit.
FIG. 8A is a schematic front view of a second conveyance regulating unit.
FIG. 8B is a schematic plan view of the second conveyance regulating unit.
FIG. 8C is a schematic plan view of the second conveyance regulating unit.
FIG. 9A is an explanatory diagram of a method for supplying the bobbin.
FIG. 9B is an explanatory diagram of a method for discharging the bobbin.
FIG. 10 is a block diagram illustrating a configuration of a control device.
FIG. 11 is a flowchart illustrating a processing procedure performed by the control device.
FIG. 12 is a flowchart illustrating a processing procedure of discharging processing.

### Description of Embodiment

The following describes an embodiment of a production system and a method for manufacturing a processed product disclosed herein in detail with reference to the attached drawings.

In the embodiment, described is a production system that conveys a winding bobbin used for manufacturing a motor to a wire winding device, receives a bobbin on which a wire is wound from the wire winding device, and stores the bobbin in an accommodation tray. However, the present invention is not limited to the following embodiment. For example, a workpiece treated by the production system disclosed herein may be a workpiece other than the bobbin.

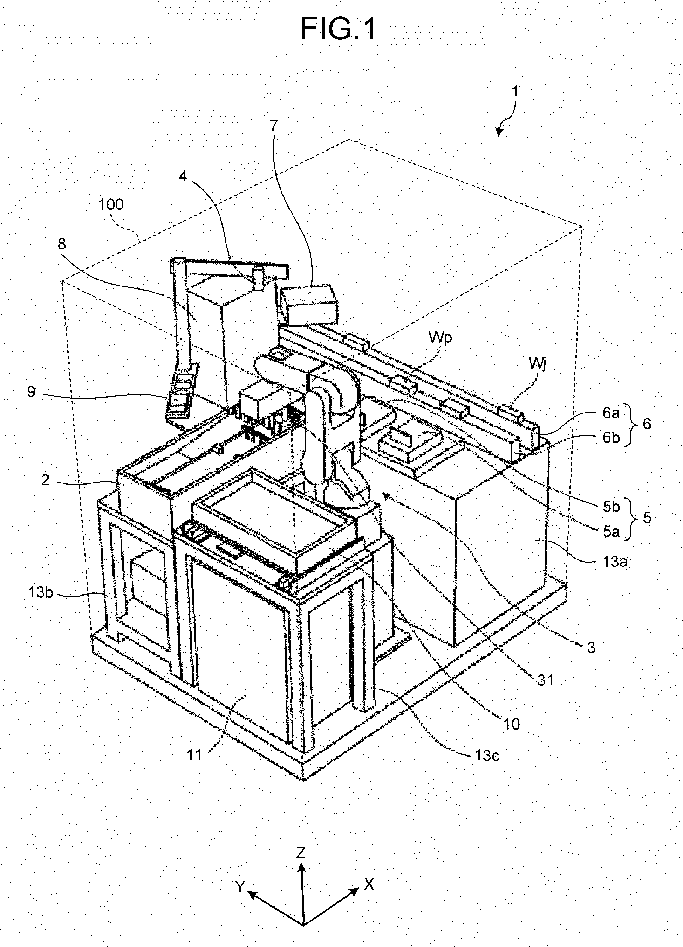

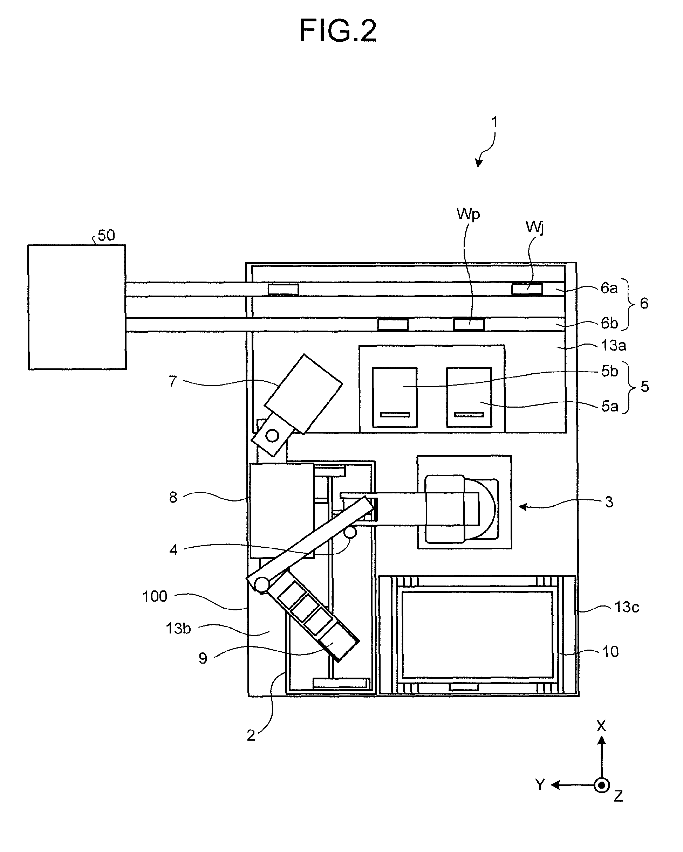

First, the following describes an external appearance of the production system according to the embodiment with reference to FIG. 1 and FIG. 2. FIG. 1 is a schematic perspective view of the production system according to the embodiment, and FIG. 2 is a schematic plan view of the production system according to the embodiment. To clarify a positional relation, an X-axis direction, a Y-axis direction, and a Z-axis direction orthogonal to each other are defined in the following description, and the Z-axis positive direction is assumed to be a vertically upward direction.

As illustrated in FIG. 1 and FIG. 2, a production system 1 according to the embodiment includes a circulating device 2, a robot 3, an imaging device 4, a delivering unit 5, a conveying device 6, a brushing unit 7, an inspecting device 8, a bobbin reversing unit 9, an accommodation tray 10, a control device 11, and the like in a cell 100.

The robot 3 is arranged at substantially the center of the cell 100. Each of the devices other than the robot 3 is arranged around the robot 3. For example, the delivering unit 5 is arranged in the X-axis positive direction of the robot 3. The circulating device 2, the brushing unit 7, the inspecting device 8, the bobbin reversing unit 9, and the like are arranged in the Y-axis positive direction thereof. The accommodation tray 10 is arranged in the X-axis negative direction of the robot 3.

The conveying device 6 is arranged behind the delivering unit 5 when viewed from the robot 3. The conveying device 6 is connected to a wire winding device 50 (refer to FIG. 2) that is arranged adjacently to the production system 1. The following describes the configuration of each device individually.

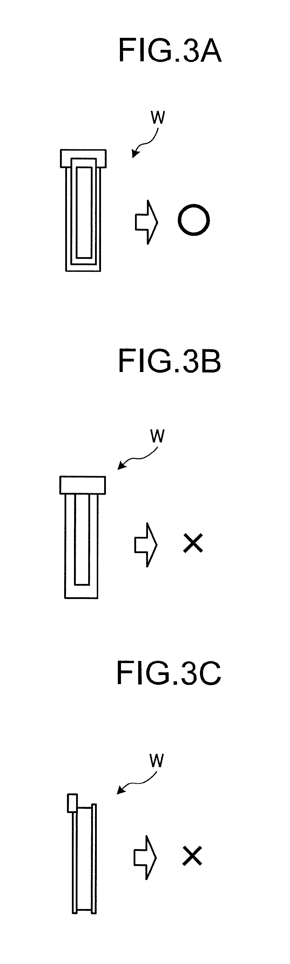

The circulating device 2 is a device that circulates a bobbin W (refer to FIG. 3) along a certain path. A specific configuration of the circulating device 2 will be described later. The robot 3 performs an operation of holding the circulated bobbin W in a holding region as part of the certain path to move the bobbin W to the delivering unit 5.

A front surface, a back surface, and a side surface of the bobbin W circulated by the circulating device 2 have different shapes from each other. The bobbin W is circulated by the circulating device 2 in a state in which any of the surfaces is directed in the Z-axis positive direction. Among bobbins W, the robot 3 holds only the bobbin W circulated in a posture satisfying a condition set in advance, in the embodiment, the bobbin W circulated with the back surface thereof directed in the Z-axis positive direction.

Such a point will be described with reference to FIG. 3A to FIG. 3C. FIG. 3A to FIG. 3C are schematic diagrams illustrating a shape of the bobbin W viewed from different directions. Among the respective surfaces of the bobbin W, the embodiment defines the surface illustrated in FIG. 3A as a "back surface", the surface illustrated in FIG. 3B as a "front surface", and the surface illustrated in FIG. 3C as a "side surface".

As illustrated in FIG. 3A to FIG. 3C, the back surface, the front surface, and the side surface of the bobbin W are formed to have different shapes. Among the bobbins W, the robot 3 holds only the bobbin W circulated with its back surface directed in the Z-axis positive direction illustrated in FIG. 3A to move the bobbin W to the delivering unit 5.

The robot 3 is, for example, a vertical articulated robot, and holds the bobbin W using a holding part 31 arranged at a tip of an arm. In the example of the embodiment, the robot 3 includes the holding part 31 for gripping the bobbin W. However, the holding part included in the robot is not limited to the gripping-type holding part. For example, the robot may include a sucking-type holding part for sucking and holding a workpiece utilizing air pressure.

The robot 3 also performs an operation other than the operation of holding the bobbin W circulated by the circulating device 2 to move the bobbin W to the delivering unit 5. For example, the robot 3 also performs an operation of receiving the bobbin W on which a wire is wound by the wire winding device 50 (hereinafter, referred to as a "processed bobbin Wp") from the delivering unit 5, moving the received processed bobbin Wp sequentially to the brushing unit 7, the inspecting device 8, and the bobbin reversing unit 9, and storing the processed bobbin Wp in the accommodation tray 10.

The imaging device 4 images the bobbin W circulated by the circulating device 2. An image imaged by the imaging device 4 is transmitted to the control device 11. The imaging device 4 is, for example, a charge coupled device (CCD) camera.

The delivering unit 5 is a device for delivering the bobbin W or the processed bobbin Wp between the robot 3 and the conveying device 6. Specifically, the delivering unit 5 includes an attaching device 5a and a detaching device 5b.

The attaching device 5a attaches a predetermined jig to the bobbin W received from the robot 3, and delivers the bobbin W to which the jig is attached (hereinafter, referred to as a "bobbin with a jig Wj") to a carrying-out part 6a of the conveying device 6. The detaching device 5b receives the processed bobbin Wp carried in from the wire winding device 50 through a carrying-in part 6b of the conveying device 6, and detaches the jig from the received processed bobbin Wp.

The conveying device 6 is a device for carrying out the bobbin with a jig Wj and carrying in the processed bobbin Wp. Specifically, the conveying device 6 includes the carrying-out part 6a and the carrying-in part 6b. The carrying-out part 6a and the carrying-in part 6b extend along the Y-axis direction, and are connected to the wire winding device 50 adjacent to the production system 1 in the Y-axis positive direction.

The carrying-out part 6a carries out the bobbin with a jig Wj to the wire winding device 50 outside the cell 100. The carrying-in part 6b carries the processed bobbin Wp in the cell 100 from the wire winding device 50. Each of the carrying-out part 6a and the carrying-in part 6b is, for example, a conveyor belt.

The brushing unit 7 is a device that removes particles attached to the processed bobbin Wp using a rotary brush. The inspecting device 8 is a device that images the processed bobbin Wp using an imaging device such as a CCD camera, and inspects quality of a winding state or whether there is chipping on the bobbin based on an imaging result. The bobbin reversing unit 9 rotates, around the Z-axis, the processed bobbin Wp that is placed with its side surface illustrated in FIG. 3C being directed in the Z-axis positive direction by 180 degrees to reverse the processed bobbin Wp. The accommodation tray 10 is a tray that accommodates the processed bobbin Wp passed through a brushing step by the brushing unit 7, an inspecting step by the inspecting device 8, and a reversing step by the bobbin reversing unit 9.

The control device 11 is a device that controls the entire production system 1. The control device 11 detects the bobbin W (refer to FIG. 3A) circulated with its back surface being directed in the Z-axis positive direction based on the image data acquired from the imaging device 4. When detecting the bobbin W with its back surface facing up, the control device 11 instructs the robot 3 to perform a holding operation of the detected bobbin W. It is assumed that, when the bobbin W is detected and the detected bobbin W reaches the holding region, the control device 11 stops circulation of the bobbin W by the circulating device 2 and instructs the robot 3 to perform the holding operation of the detected bobbin W. Such a point will be described later.

A workbench 13a is arranged in the X-axis positive direction of the robot 3, and the delivering unit 5 and the conveying device 6 are placed on the workbench 13a. A workbench 13b is arranged in the Y-axis positive direction of the robot 3, and the circulating device 2, the imaging device 4, the brushing unit 7, the inspecting device 8, and the bobbin reversing unit 9 are placed on the workbench 13b. A workbench 13c is arranged in the X-axis negative direction of the robot 3, and the accommodation tray 10 is placed on the workbench 13c. The control device 11 is arranged, for example, in an empty space below the workbench 13c.

The production system 1 according to the embodiment is configured as described above, and each device such as the circulating device 2, the robot 3, and the delivering unit 5 is operated under the control of the control device 11. A series of operations of the production system 1 will be simply described herein.

When the bobbin W circulated with its back surface facing up is detected from among the bobbins W circulated by the circulating device 2, the robot 3 holds and passes the detected bobbin W to the attaching device 5a of the delivering unit 5. When receiving the bobbin W from the robot 3, the attaching device 5a attaches a jig to the received bobbin W and places the bobbin W on the carrying-out part 6a of the conveying device 6. The bobbin with a jig Wj placed on the carrying-out part 6a is conveyed to the wire winding device 50 by the carrying-out part 6a, and a wire is attached to the bobbin with a jig Wj by the wire winding device 50.

The processed bobbin Wp to which the wire is attached by the wire winding device 50 is carried in the cell 100 again by the carrying-in part 6b of the conveying device 6. The processed bobbin Wp is conveyed to a position before the detaching device 5b by the carrying-in part 6b. Thereafter, the detaching device 5b takes out the processed bobbin Wp from the carrying-in part 6b and detaches the jig attached thereto. The detached jig is conveyed by the carrying-in part 6b to a position before the attaching device 5a, and attached to another bobbin W by the attaching device 5a.

When the detaching device 5b detaches the jig from the processed bobbin Wp, the robot 3 receives the processed bobbin Wp from the detaching device 5b, and conveys the received processed bobbin Wp to the brushing unit 7. The brushing unit 7 performs the brushing step of the processed bobbin Wp.

When the brushing step by the brushing unit 7 is completed, the robot 3 conveys the processed bobbin Wp to the inspecting device 8. The inspecting device 8 performs the inspecting step of the processed bobbin Wp. When abnormality is not found in the processed bobbin Wp at the inspecting step, the robot 3 conveys the processed bobbin Wp to the bobbin reversing unit 9. The bobbin reversing unit 9 performs the reversing step of the processed bobbin Wp. The reversing step facilitates an operation performed by the robot 3 for storing the processed bobbin Wp in the accommodation tray 10 in a predetermined direction.

When the reversing step by the bobbin reversing unit 9 is completed, the robot 3 receives the processed bobbin Wp from the bobbin reversing unit 9, and stores the received processed bobbin Wp in the accommodation tray 10. The processed bobbin Wp is accommodated in the accommodation tray 10 in a specific direction (for example, with its front surface facing up as illustrated in FIG. 3B).

As described above, in the production system 1 according to the embodiment, the bobbin W of which posture satisfies a condition set in advance, specifically, the bobbin W with its back surface facing up (refer to FIG. 3A) is selected as a holding target from among the bobbins W circulated by the circulating device 2.

The circulating device 2 according to the embodiment includes a posture changing mechanism that changes the posture of the circulated bobbin W. Specifically, the circulating device 2 according to the embodiment includes a mechanism, as the posture changing mechanism, that changes the posture of the bobbin W by dropping the bobbin W from a predetermined height.

Accordingly, in the production system 1, even the bobbin W circulated with its front or side surface facing up, that is, the bobbin W that is not the holding target of the robot 3 can be caused to be the holding target of the robot 3 by dropping the bobbin W and changing the direction of the bobbin W using the posture changing mechanism.

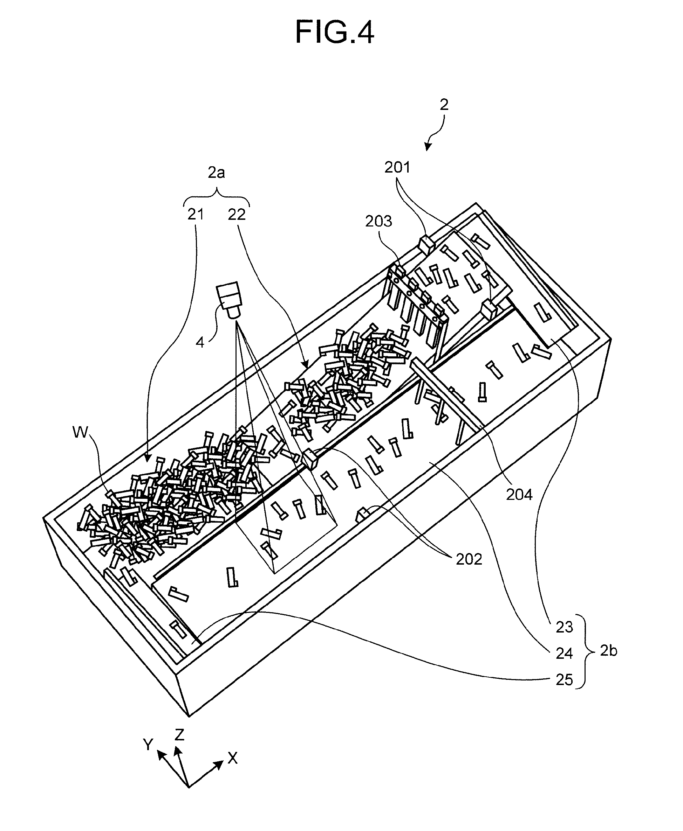

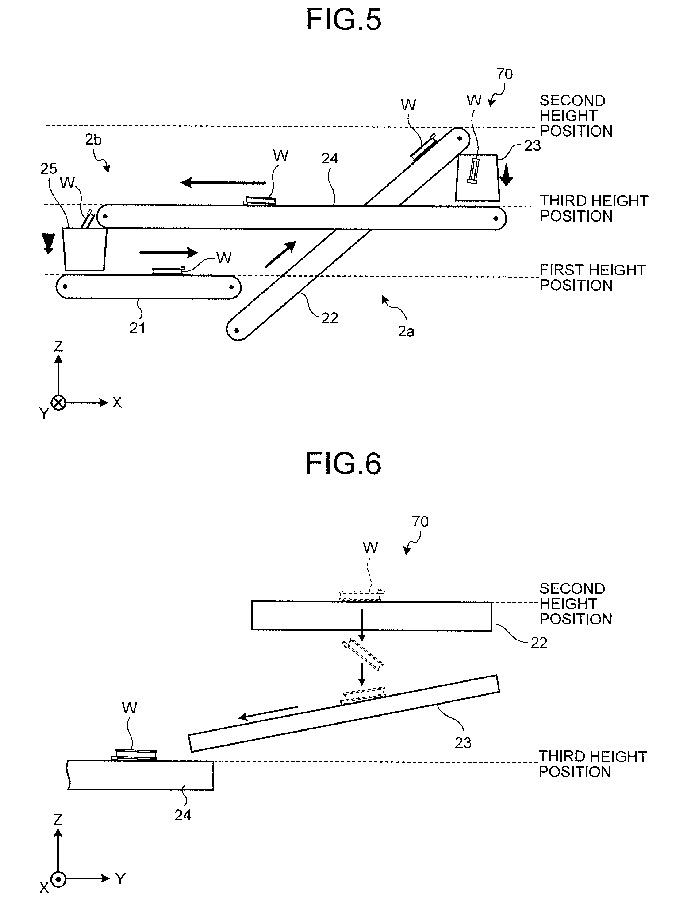

The following describes a specific configuration of the circulating device 2 with reference to FIG. 4 to FIG. 6. FIG. 4 is a schematic perspective view of the circulating device 2. FIG. 5 is a schematic side view of the posture changing mechanism viewed from the Y-axis negative direction, and FIG. 6 is a schematic side view of the posture changing mechanism viewed from the X-axis positive direction. FIG. 5 and FIG. 6 are diagrams for explaining a height relation among conveying units, and members other than the conveying units are not illustrated therein.

As illustrated in FIG. 4, the circulating device 2 includes a forward path part 2a for conveying the bobbin W in the X-axis positive direction, and a backward path part 2b for conveying the bobbin W that is conveyed by the forward path part 2a in the Z-axis negative direction to be returned to the forward path part 2a. In this way, the bobbin W is circulated in the path formed with the forward path part 2a and the backward path part 2b. A posture changing mechanism 70 (refer to FIG. 5) according to the embodiment is configured by the forward path part 2a and the backward path part 2b.

The imaging device 4 is arranged above the backward path part 2b, and images the bobbin W conveyed on the backward path part 2b. When the bobbin W circulated in a posture with its back surface facing up (refer to FIG. 3A) is detected, the control device 11 stops the circulation of the bobbin W by the circulating device 2, and instructs the robot 3 to hold the detected bobbin W. Due to this, the detected bobbin W can be prevented from being returned to the forward path part 2a.

The forward path part 2a includes a bobbin supplying unit 21 and a first conveying unit 22. The bobbin supplying unit 21 and the first conveying unit 22 are arranged in this order in the X-axis positive direction. That is, the first conveying unit 22 is arranged on the upstream side of the bobbin supplying unit 21.

The bobbin supplying unit 21 is arranged, as illustrated in FIG. 5, substantially horizontally at a first height position, and conveys the bobbin W supplied from the outside of the cell 100 in the X-axis positive direction to be passed to the first conveying unit 22. The bobbin supplying unit 21 can also convey the bobbin W in the X-axis negative direction, not only in the X-axis positive direction. Such a point will be described later.

The first conveying unit 22 further conveys the bobbin W conveyed from the bobbin supplying unit 21 in the X-axis positive direction. As illustrated in FIG. 5, the first conveying unit 22 is inclined at a certain angle, and moves the bobbin W conveyed from the bobbin supplying unit 21 to a second height position, which is higher than the first height position. Thereafter, the bobbin W that is moved to the second height position is dropped from the second height position.

The backward path part 2b includes a second conveying unit 24, a third conveying unit 23, and a fourth conveying unit 25. The second conveying unit 24 is arranged in parallel to the forward path part 2a and conveys the bobbin W in the X-axis negative direction. The second conveying unit 24 is arranged substantially horizontally at a third height position, which is lower than the second height position and higher than the first height position. A holding region in which the robot 3 performs the holding operation of the bobbin W is formed in the second conveying unit 24.

The third conveying unit 23 is a member extending along the Y-axis direction. An end of the third conveying unit 23 in the Y-axis positive direction is arranged below the downstream end of the first conveying unit 22, and an end thereof in the Y-axis negative direction is arranged above the upstream end of the second conveying unit 24.

The third conveying unit 23 is arranged to make a downward slope from the Y-axis positive direction toward the Y-axis negative direction, receives the bobbin W dropped from the first conveying unit 22, and moves the received bobbin W by gravity to be delivered to the second conveying unit 24.

The fourth conveying unit 25 is a member extending along the Y-axis direction. An end of the fourth conveying unit 25 in the Y-axis negative direction is arranged below the downstream end of the second conveying unit 24, and an end thereof in the Y-axis positive direction is arranged above the upstream end of the bobbin supplying unit 21.

The fourth conveying unit 25 is arranged to make a downward slope from the Y-axis negative direction toward the Y-axis positive direction, moves the bobbin W conveyed to the downstream end of the second conveying unit 24 by gravity to be returned to the bobbin supplying unit 21.

In this way, after being supplied to the bobbin supplying unit 21, the bobbin W is returned again to the bobbin supplying unit 21 sequentially through the first conveying unit 22, the third conveying unit 23, the second conveying unit 24, and the fourth conveying unit 25.

In the embodiment, for example, each of the bobbin supplying unit 21, the first conveying unit 22, and the second conveying unit 24 is a conveyor belt that mechanically conveys the bobbin W using a power source such as a motor. In contrast, the third conveying unit 23 and the fourth conveying unit 25 convey the bobbin W utilizing a slope without using the power source. In the production system 1 according to the embodiment, the bobbin W can be returned from the second conveying unit 24 to the bobbin supplying unit 21 without using the power source such as a motor by arranging the second conveying unit 24 at a position higher than the bobbin supplying unit 21.

The bobbin W circulated by the circulating device 2 is moved to the second height position by the first conveying unit 22, and dropped from the second height position toward the third conveying unit 23. At this time, the posture of the bobbin W may be changed due to dropping.

For example, as illustrated in FIG. 6, even when the bobbin W is conveyed in a posture with its front surface facing up (refer to FIG. 3B) on the first conveying unit 22, the posture may be changed such that its back surface faces up (refer to FIG. 3A) due to the dropping from the second height position. In this case, the bobbin W becomes the holding target of the robot 3.

In this way, in the production system 1 according to the embodiment, the bobbin W is circulated while being dropped halfway using the circulating device 2, so that all the bobbins W can be held by the robot 3 finally.

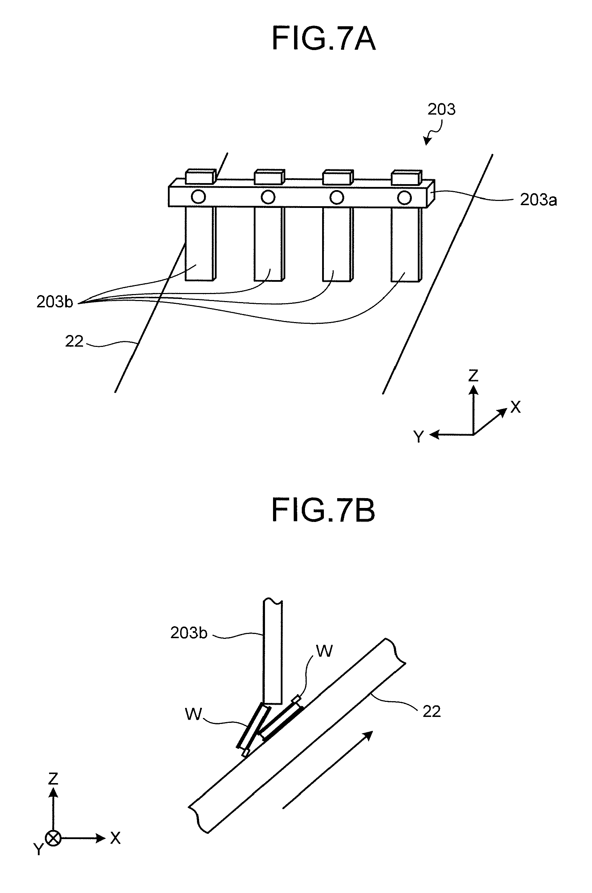

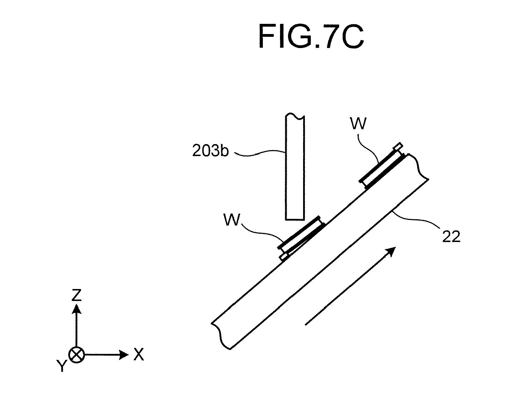

The following describes another configuration of the circulating device 2. As illustrated in FIG. 4, the circulating device 2 includes a first conveyance regulating unit 203. The following describes the configuration of the first conveyance regulating unit 203 with reference to FIG. 7A to FIG. 7C. FIG. 7A is a schematic perspective view of the first conveyance regulating unit 203. FIG. 7B and FIG. 7C are schematic side views of the first conveyance regulating unit 203.

As illustrated in FIG. 7A, the first conveyance regulating unit 203 includes a base 203a that is arranged above the first conveying unit 22 and extends in the Y-axis direction, and a long-length hanging part 203b of which one end is fixed to the base 203a and hanging downward toward a conveying surface of the first conveying unit 22.

The hanging part 203b is made of rubber and the like. A plurality of hanging parts 203b are arranged at predetermined intervals on the base 203a. A gap through which the bobbin W can pass is formed between the other end of each of the hanging parts 203b and the conveying surface.

As illustrated in FIG. 7B, there may be bobbins W conveyed in a state of vertically overlapping with each other among the bobbins W that are conveyed by the first conveying unit 22. In such an overlapped state, the bobbin W with its back surface facing up as the holding target may not be appropriately detected. Even if the bobbin W can be detected, the holding operation by the robot 3 may be hindered.

In the embodiment, the bobbin W overlapping on another bobbin W comes into contact with the hanging part 203b of the first conveyance regulating unit 203. As a result, the bobbin W overlapping on another bobbin W is restricted not to be conveyed to the upstream side of the first conveying unit 22, so that the overlapping with another bobbin W is eliminated.

In this way, in the production system 1 according to the embodiment, the vertical overlapping of the bobbins W is eliminated using the first conveyance regulating unit 203. Accordingly, with the production system 1, the bobbin W with its back surface facing up can be appropriately detected and the holding operation by the robot 3 can be securely performed.

Because the first conveying unit 22 itself is inclined, the bobbin W and the like unstably overlapping on the bobbin W tend to, for example, be naturally dropped by gravity. That is, the vertical overlapping of the bobbins W can also be eliminated by conveying the bobbin W using the first conveying unit 22 that is inclined. The first conveyance regulating unit 203 is arranged on the downstream side from the center of the first conveying unit 22. Due to this, the overlapping of the bobbins W that has been eliminated in some degree by inclining the first conveying unit 22 can be further eliminated with the first conveyance regulating unit 203.

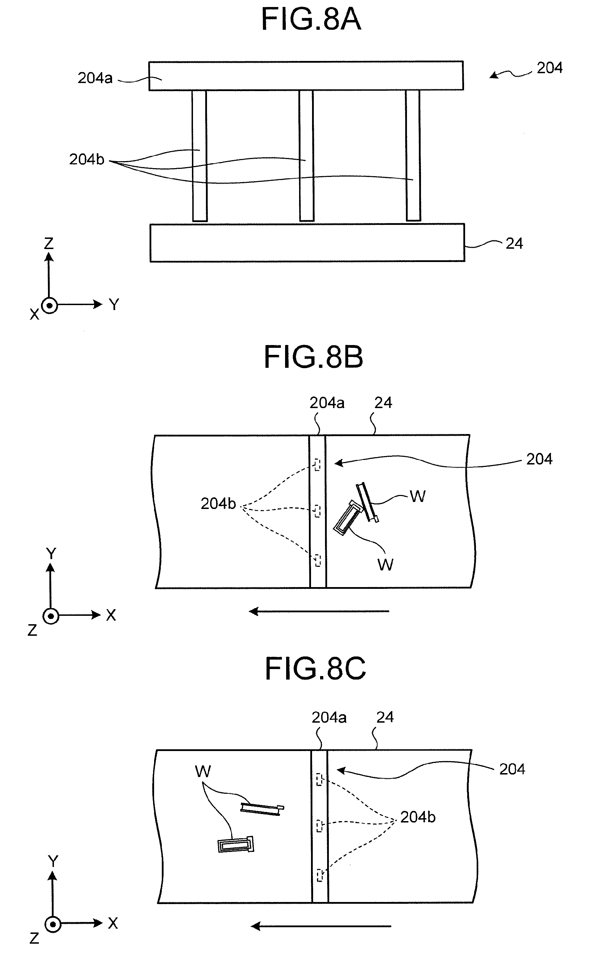

Returning to FIG. 4, the following continues the description about another configuration of the circulating device 2. The circulating device 2 further includes a second conveyance regulating unit 204. The following describes the configuration of the second conveyance regulating unit 204 with reference to FIG. 8A to FIG. 8C. FIG. 8A is a schematic front view of the second conveyance regulating unit 204. FIG. 8B and FIG. 8C are schematic plan views of the second conveyance regulating unit 204.

As illustrated in FIG. 8A, the second conveyance regulating unit 204 is, similarly to the first conveyance regulating unit 203, a member for restricting the conveyance of the bobbin W, and specifically eliminates a state in which the bobbins W are in proximity to each other.

Specifically, the second conveyance regulating unit 204 includes a base 204a that is arranged above the second conveying unit 24 and extends in the Y-axis direction, and a long-length hanging part 204b, one end of which is fixed to the base 204a, the long-length hanging part 204b hanging downward toward a conveying surface of the second conveying unit 24.

The hanging part 204b is, for example, a thin plastic member. A plurality of hanging parts 204b are arranged at predetermined intervals on the base 204a. A small gap through which the bobbin W cannot pass is formed between the other end of each of the hanging parts 204b and the conveying surface. That is, the gap between the hanging part 204b and the conveying surface of the second conveying unit 24 is formed to be smaller than the gap between the hanging part 203b and the conveying surface of the first conveying unit 22. The other end of the hanging part 204b may be in contact with the conveying surface of the second conveying unit 24.

As illustrated in FIG. 8B, even when the vertical overlapping of the bobbins W is eliminated by the first conveyance regulating unit 203, the bobbins W may be conveyed in a proximity state. When the bobbins W are in proximity to each other in this way, the holding operation by the robot 3 may be hindered.

Accordingly, in the production system 1 according to the embodiment, the second conveyance regulating unit 204 is arranged on the second conveying unit 24 to scatter the bobbins W conveyed on the second conveying unit 24 in a proximity state (refer to FIG. 8C), which eliminates the proximity state. Due to this, in the production system 1, the robot 3 can perform the holding operation more securely.

In the example of this embodiment, the four hanging parts 203b are arranged with respect to the base 203a of the first conveyance regulating unit 203, and the three hanging parts 204b are arranged with respect to the base 204a of the second conveyance regulating unit 204. However, the number of the hanging parts 203b and 204b is not limited thereto. Each of the hanging parts 203b and 204b may be a relatively soft member that hardly damages the bobbin W, and material thereof is not limited to rubber or plastic.

Returning to FIG. 4, the following continues the description about another configuration of the circulating device 2. The circulating device 2 includes a first detection unit 201 that detects the bobbin W on the first conveying unit 22 and a second detection unit 202 that detects the bobbin W on the second conveying unit 24. As the first detection unit 201 and the second detection unit 202, for example, a transmissive laser sensor and the like can be used.

Detection results of the bobbin W by the first detection unit 201 and the second detection unit 202 are transmitted to the control device 11. The control device 11 determines whether there is the bobbin W on the first conveying unit 22 and the second conveying unit 24 based on the detection results. The determination results are used to discharge the bobbin W from the circulating device 2.

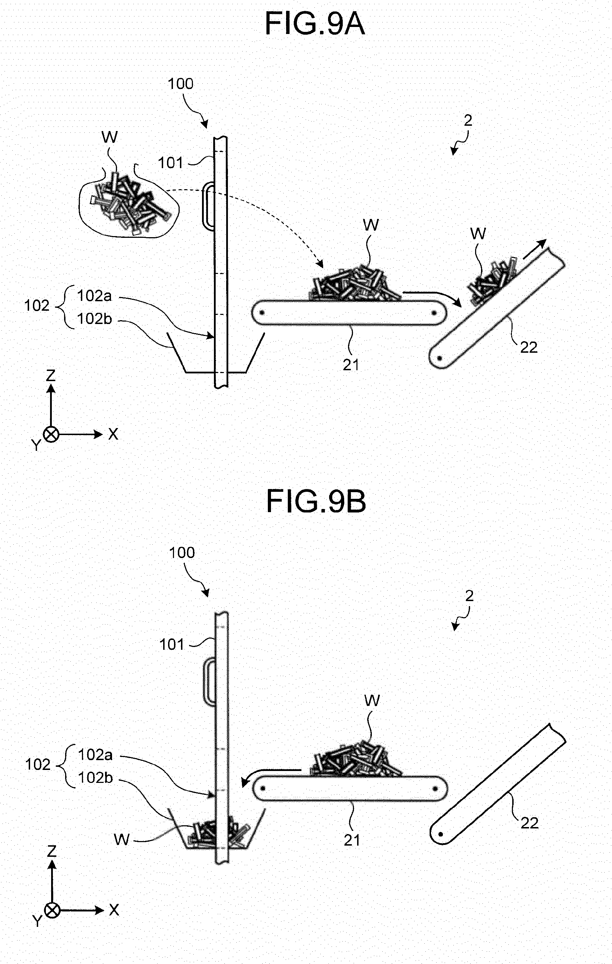

The following describes a method for supplying and a method for discharging the bobbin W to/from the circulating device 2 with reference to FIG. 9A and FIG. 9B. FIG. 9A is an explanatory diagram of the method for supplying the bobbin W, and FIG. 9B is an explanatory diagram of the method for discharging the bobbin W.

As illustrated in FIG. 9A, in the cell 100, a door body 101 is arranged in the vicinity of and above the bobbin supplying unit 21. Operators and the like open the door body 101 to supply the bobbin W to the bobbin supplying unit 21 from above.

To circulate the bobbin W, the bobbin supplying unit 21 conveys the supplied bobbin W in the X-axis positive direction and passes the bobbin W to the first conveying unit 22. Accordingly, the bobbin W is continuously circulated through the first conveying unit 22, the third conveying unit 23, the second conveying unit 24, the fourth conveying unit 25, and the bobbin supplying unit 21 until being held by the robot 3.

A bobbin discharging unit 102 is arranged on a side opposite to the side on which the first conveying unit 22 of the bobbin supplying unit 21 is arranged. The bobbin discharging unit 102 includes an opening 102a formed on the cell 100 and a receiving part 102b provided in the opening 102a. The opening 102a is formed in the vicinity of and below the bobbin supplying unit 21. The receiving part 102b is arranged across the inside and the outside of the cell 100.

As illustrated in FIG. 9B, to discharge the bobbin W from the circulating device 2, the bobbin supplying unit 21 conveys the bobbin W to the side opposite to the side to which the bobbin W is circulated, that is, to the bobbin discharging unit 102 arranged in the X-axis negative direction. Accordingly, the bobbin W on the bobbin supplying unit 21 is dropped from the bobbin supplying unit 21 and received by the receiving part 102b of the bobbin discharging unit 102. The bobbin W received by the receiving part 102b is collected by the operators and the like thereafter.

In this way, in the production system 1, the bobbin discharging unit 102 is arranged on the side opposite to the side on which the first conveying unit 22 of the bobbin supplying unit 21 is arranged. To circulate the bobbin W, the bobbin supplying unit 21 conveys the bobbin W toward the first conveying unit 22. To discharge the bobbin W from the circulating device 2, the bobbin supplying unit 21 conveys the bobbin W toward the bobbin discharging unit 102 arranged on the side opposite to the first conveying unit 22.

Accordingly, in the production system 1, the bobbin W supplied to the circulating device 2 can be easily discharged.

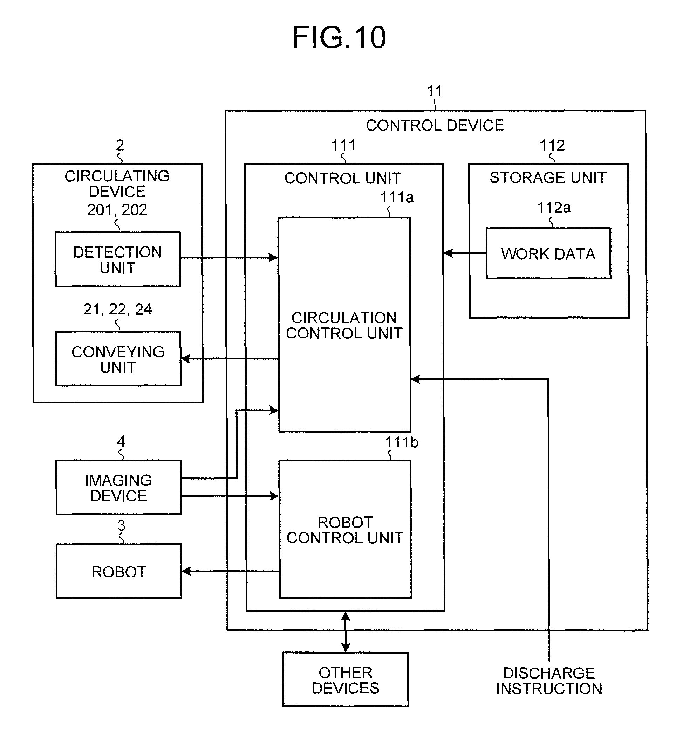

Next, the following describes the configuration of the control device 11 with reference to FIG. 10. FIG. 10 is a block diagram illustrating the configuration of the control device 11. FIG. 10 illustrates components required for explaining characteristics of the control device 11, and description of general components are omitted as appropriate.

In FIG. 10, the first detection unit 201 and the second detection unit 202 are collectively referred to as a "detection unit", and the bobbin supplying unit 21, the first conveying unit 22, and the second conveying unit 24 are collectively referred to as a "conveying unit". In FIG. 10, among the devices included in the production system 1, devices other than the circulating device 2, the robot 3, the imaging device 4, and the control device 11 are referred to as "other devices".

As illustrated in FIG. 10, the control device 11 includes a control unit 111 and a storage unit 112. The control unit 111 includes a circulation control unit 111a and a robot control unit 111b. The storage unit 112 stores therein work data 112a.

The control unit 111 performs overall control of the control device 11. The circulation control unit 111a performs operation control of the bobbin supplying unit 21, the first conveying unit 22, and the second conveying unit 24 that include the power source among the conveying units included in the circulating device 2.

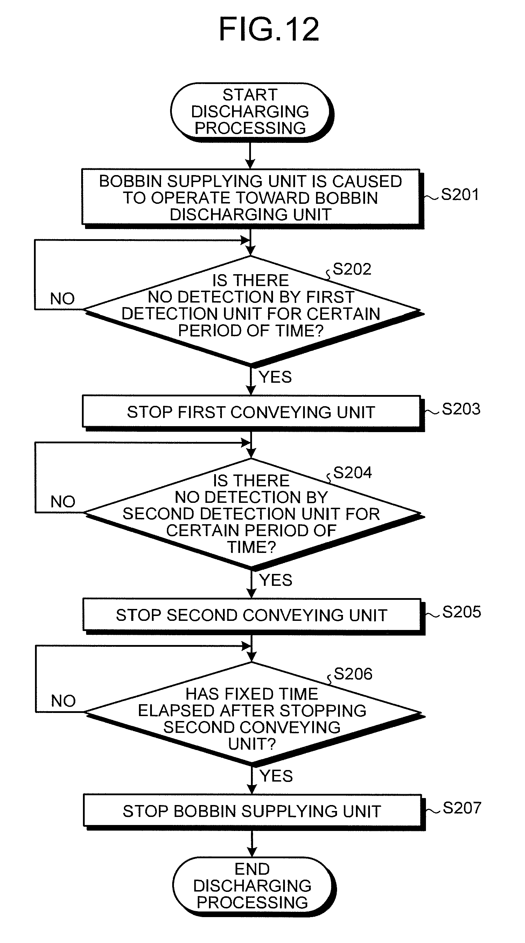

For example, to circulate the bobbin W, the circulation control unit 111a causes the bobbin supplying unit 21 and the first conveying unit 22 to operate in the X-axis positive direction, and causes the second conveying unit 24 to operate in the X-axis negative direction. When receiving an instruction to discharge the bobbin W from the outside, the circulation control unit 111a causes the bobbin supplying unit 21 to operate in the X-axis negative direction. Such a point will be described later with reference to FIG. 12.

The robot control unit 111b performs operation control of the robot 3. Specifically, based on an image imaged by the imaging device 4, the robot control unit 111b detects the bobbin W conveyed in a posture satisfying a condition set in advance, that is, with its back surface facing up, and instructs the robot 3 to hold the detected bobbin W.

The storage unit 112 is a storage device such as a hard disk drive or a nonvolatile memory, and stores therein the work data 112a. The work data 112a is information that defines operation content executed by the production system 1, for example, image data of the bobbin W with its back surface facing up to be the holding target of the robot 3. The control unit 111 controls the circulating device 2, the robot 3, or other devices based on the work data 112a.

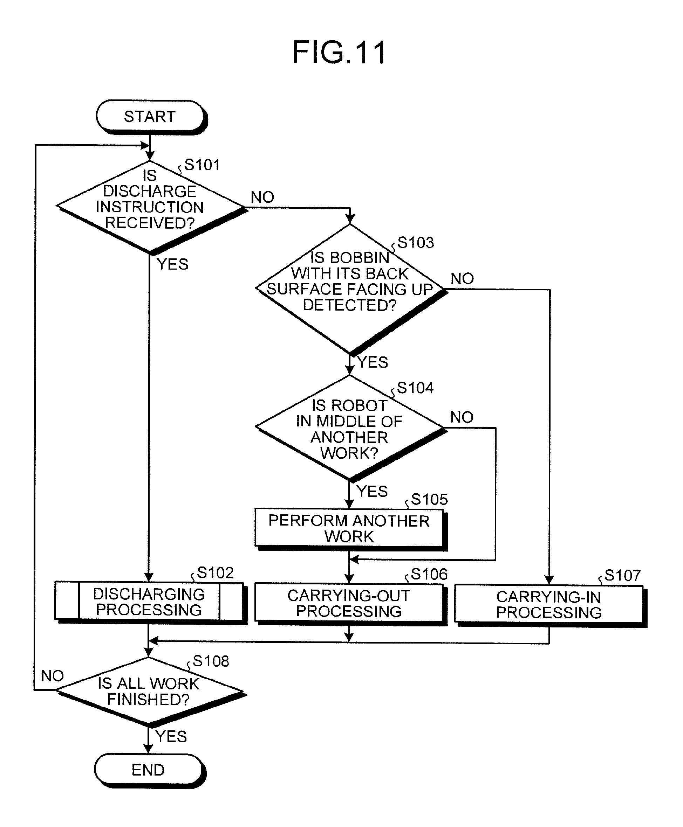

Next, the following describes a specific operation of the control device 11 with reference to FIG. 11. FIG. 11 is a flowchart illustrating a processing procedure performed by the control device 11.

As illustrated in FIG. 11, the control unit 111 of the control device 11 determines whether a discharge instruction is received from the outside (Step S101). If it is determined that the discharge instruction is received (Yes at Step S101), discharging processing is performed (Step S102). The discharging processing is processing of discharging the bobbin W in the circulating device 2 from the circulating device 2. The processing procedure of the discharging processing will be described later with reference to FIG. 12.

If the discharge instruction is not received at Step S101 (No at Step S101), the control unit 111 determines whether the bobbin W with its back surface facing up is detected (Step S103). If it is determined that the bobbin W with its back surface facing up is detected (Yes at Step S103), the process proceeds to Step S104.

At Step S104, the control unit 111 determines whether the robot 3 is in the middle of another work. If the robot 3 is in the middle of another work (Yes at Step S104), the robot 3 is caused to perform another work (Step S105), and carrying-out processing is performed (Step S106).

Herein, the carrying-out processing means processing of taking out the bobbin W with its back surface facing up detected at Step S103 from the circulating device 2 using the robot 3, attaching a jig to the taken-out bobbin W using the attaching device 5a, and passing the bobbin W to the carrying-out part 6a. Another work means, for example, work of storing the processed bobbin Wp received from the detaching device 5b by the robot 3 in the accommodation tray 10 through the brushing unit 7, the inspecting device 8, and the bobbin reversing unit 9.

In this way, when not being instructed to perform the holding operation of the bobbin W from the control device 11, the robot 3 performs another operation such as carrying-in processing, and performs the holding operation of the bobbin W according to the instruction from the control device 11 in the interval of another operation.

That is, in the production system 1 according to the embodiment, the bobbin W with its back surface facing up is not always detected because the circulating device 2 is configured to change the posture of the bobbin W due to dropping. However, even if the bobbin W with its back surface facing up is not detected for a long period of time, the robot 3 performs other operations, not only in a standby state. Due to this, efficiency of the production system 1 as a whole can be prevented from decreasing.

If the robot 3 is not in the middle of another work (No at Step S104), the process of the control unit 111 proceeds to the carrying-out processing.

On the other hand, if the bobbin W with its back surface facing up is not detected at Step S103 (No at Step S103), the control unit 111 performs the carrying-in processing (Step S107). The carrying-in processing means processing of receiving the processed bobbin Wp carried from the wire winding device 50, and storing the processed bobbin Wp in the accommodation tray 10 after performing brushing, inspection, and the like.

After finishing the discharging processing at Step S102, the carrying-out processing at Step S106, or the carrying-in processing at Step S107, the control unit 111 determines whether all the work is finished (Step S108). For example, when receiving an instruction to finish the work from the outside, or when a power supply is turned off, the control unit 111 determines that all the work is finished. If all the work is not finished at Step S108 (No at Step S108), the process of the control unit 111 proceeds to Step S101. If it is determined that all the work is finished (Yes at Step S108), the process of the control unit 111 is finished.

Next, the following describes the processing procedure of the discharging processing described in Step S102 with reference to FIG. 12. FIG. 12 is a flowchart illustrating the processing procedure of the discharging processing.

As illustrated in FIG. 12, the circulation control unit 111a of the control unit 111 causes the bobbin supplying unit 21 to operate toward the bobbin discharging unit 102 (Step S201). Due to this, the bobbin W on the bobbin supplying unit 21 is dropped on the bobbin discharging unit 102.

Subsequently, the circulation control unit 111a determines whether the bobbin W is not detected by the first detection unit 201 for a certain period of time (Step S202). In such processing, if it is determined that the bobbin W is not detected by the first detection unit 201 for a certain period of time (Yes at Step S202), the circulation control unit 111a stops the first conveying unit 22 (Step S203).

Subsequently, the circulation control unit 111a determines whether the bobbin W is not detected by the second detection unit 202 for a certain period of time (Step S204). In such processing, if it is determined that the bobbin W is not detected by the second detection unit 202 for a certain period of time (Yes at Step S204), the circulation control unit 111a stops the second conveying unit 24 (Step S205).

Subsequently, the circulation control unit 111a determines whether a fixed time has elapsed after stopping the second conveying unit 24 (Step S206). In such processing, if it is determined that a fixed time has elapsed after stopping the second conveying unit 24 (Yes at Step S206), the circulation control unit 111a stops the bobbin supplying unit 21 (Step S207) to finish the discharging processing.

As described above, the production system 1 according to the embodiment includes the circulating device 2, the robot 3, and the posture changing mechanism 70. The circulating device 2 circulates the bobbin W along the certain path. The robot 3 holds the circulated bobbin W in the holding region, which is part of the certain path, to move the bobbin W to a certain place. The posture changing mechanism 70 is arranged in the circulating device 2 and changes the posture of the circulated bobbin W.

The posture changing mechanism 70 of the circulating device 2 includes the forward path part 2a and the backward path part 2b. The forward path part 2a moves the bobbin W from the first height position to the second height position, which is higher than the first height position, and drops the bobbin W from the second height position. The backward path part 2b returns the bobbin W dropped from the second height position in the forward path part 2a to the forward path part 2a. Accordingly, with the production system 1 according to the embodiment, versatility for a workpiece type to be treated can be enhanced.

In the example of the embodiment described above, the posture changing mechanism changes the posture of the workpiece by dropping the workpiece. Alternatively, the posture changing mechanism may change the posture of the workpiece using another method. For example, the posture changing mechanism may be a mechanism that is arranged in the circulating device and changes the posture of the workpiece by vibrating any of the paths (a vibration generating device).

The posture changing mechanism may be a mechanism that changes the posture of the workpiece by jetting gas (for example, air) to the workpiece circulated by the circulating device.

In the example of the embodiment described above, there is one posture that satisfies the condition set in advance. Alternatively, there may be a plurality of postures, not limited to one, that satisfies the condition set in advance.

In the example of the embodiment described above, a vertical articulated robot is applied as the robot 3. However, the robot is not limited to the vertical articulated robot, and may be a parallel link robot, an orthogonal robot, and the like that can hold and convey the workpiece.

In the example of the embodiment described above, the robot 3 also performs the operation of storing the processed bobbin Wp in the accommodation tray 10. The robot 3 may further perform an operation of placing a bottom plate member (not illustrated) on the processed bobbins Wp when the accommodation tray 10 is filled with the processed bobbins Wp.

The bottom plate member is made of, for example, corrugated cardboard or thick paper, and is arranged in a range where the holding part 31 of the robot 3 can reach. The robot 3 replaces an end effector thereof from the gripping-type holding part 31 to a sucking-type holding part, and sucks and holds the bottom plate member to be placed on the processed bobbins Wp stored in the accommodation tray 10. Accordingly, additional processed bobbins Wp can be stored on the bottom plate member without replacing the accommodation tray 10.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

- 1: Production system
- 2: Circulating device
- 2a: Forward path part
- 21: Bobbin supplying unit
- 22: First conveying unit
- 2b: Backward path part
- 23: Third conveying unit
- 24: Second conveying unit
- 25: Fourth conveying unit
- 70: Posture changing mechanism
- 201: First detection unit
- 202: Second detection unit
- 203: First conveyance regulating unit
- 203a: Base
- 203b: Hanging part
- 204: Second conveyance regulating unit
- 204a: Base
- 204b: Hanging part
- 3: Robot
- 4: Imaging device
- 5: Delivering unit
- 6: Conveying device
- 7: Brushing unit
- 8: Inspecting device
- 9: Bobbin reversing unit
- 10: Accommodation tray
- 11: Control device
- 100: Cell
- 102: Bobbin discharging unit
- W: Bobbin
- Wj: Bobbin with a jig
- Wp: Processed bobbin

## Claims

1. A production system comprising:
a circulating device that circulates a workpiece along a certain path;
a robot that holds the workpiece circulated by the circulating device in a holding region that is part of the certain path, to move the workpiece to a certain place; and
a posture changing mechanism that is arranged in the circulating device and changes a posture of the workpiece circulated by the circulating device.

2. The production system according to claim 1, wherein
the posture changing mechanism of the circulating device comprises:
a forward path part that moves the workpiece from a first height position to a second height position that is higher than the first height position, and drops the workpiece from the second height position; and
a backward path part that returns the workpiece dropped from the second height position in the forward path part to the forward path part.

3. The production system according to claim 2, wherein
the forward path part comprises:
a workpiece supplying unit that is arranged at the first height position; and
a first conveying unit that is inclined at a certain angle and moves the workpiece supplied to the workpiece supplying unit to the second height position to drop the workpiece from the second height position, and
the backward path part comprises:
a second conveying unit that is arranged at a third height position that is lower than the second height position, the second conveying unit including the holding region;
a third conveying unit that receives the workpiece dropped from the second height position in the first conveying unit and delivers the received workpiece to the second conveying unit; and
a fourth conveying unit that returns the workpiece that is not held by the robot to the workpiece supplying unit from the second conveying unit.

4. The production system according to claim 3, comprising:
an imaging device that images the workpiece on the second conveying unit; and
a control device that detects the workpiece conveyed in a posture satisfying a condition set in advance based on an image imaged by the imaging device, and instructs the robot to hold the detected workpiece.

5. The production system according to claim 4, wherein the robot performs a certain operation when not being instructed to perform a holding operation of the workpiece from the control device, and performs the holding operation of the workpiece according to an instruction from the control device in an interval of the certain operation.

6. The production system according to claim 4 or 5, wherein, when the workpiece conveyed in a posture satisfying the condition set in advance is detected and the workpiece reaches the holding region, the control device stops circulation of the workpiece by the circulating device and instructs the robot to hold the detected workpiece.

7. The production system according to any one of claims 3 to 6, wherein the circulating device further comprises a first conveyance regulating unit hanging downward from above the first conveying unit toward a conveying surface of the first conveying unit.

8. The production system according to any one of claims 3 to 7, wherein the circulating device further comprises a second conveyance regulating unit that is arranged on the upstream side of the region on the second conveying unit in which the holding operation of the workpiece is performed by the robot, and hangs downward from above the second conveying unit toward the conveying surface of the second conveying unit.

9. The production system according to any one of claims 3 to 8, wherein the workpiece supplying unit conveys the workpiece toward the first conveying unit to circulate the workpiece, and conveys the workpiece toward a workpiece discharging unit arranged on a side opposite to the first conveying unit to discharge the workpiece from the circulating device.

10. A method for manufacturing a processed product, the method comprising:
circulating workpieces used for manufacturing the processed product by using a circulating device including: a forward path part that moves the workpieces from a first height position to a second height position that is higher than the first height position, and drops the workpiece from the second height position; and a backward path part that returns the workpiece dropped from the second height position in the forward path part to the forward path part; and
holding a workpiece circulated in a posture satisfying a condition set in advance among the workpieces circulated by the circulating device, using a robot to move the workpiece to a certain place.
